# EUROPEAN PATENT APPLICATION

(11) **EP 3 981 512 A1**
(43) Date of publication of application: **13.04.2022**
(21) Application number: 20201035.1
(22) Date of filing: 09.10.2020
(51) Int. Cl.: B01L 3/02, G01N 30/60, G01N 1/40

(54) **SEPARATION DEVICE AND METHOD OF SEPARATION**

(30) Priority: 06.10.2020 US 202063087996 P
(71) Applicant: Phynexus, Inc., San Jose, CA 95136 (US)
(72) Inventor: GO, Gihoon, San Jose, CA 95139 (US); APLAON, Don B, Saratoga, CA 95070 (US); HUANG, Fanny, San Jose, CA 95136 (US); GJERDE, Douglas T., Saratoga, CA 95070 (US)
(74) Representative: Brann AB

(57) **Abstract**

The present invention relates to the readily automated methods for the separation of biomolecules, such as proteins or nucleic acids. More specifically, the invention relates to a separation device, which includes at least one column provided with a bottom liquid inlet/outlet and adapted to receive a separation media. At least part of an elongated frit has been arranged substantially parallel to the column walls, segregating the separation media from the bottom liquid inlet/outlet. The elongated frit may be shaped as a tube and should have a porosity that serves to retain separation media within the column during sample processing.

Further, the invention relates to a method of separating at least one target molecule from a liquid, which method comprises providing at least one column provided with a bottom liquid inlet/outlet and optionally with a top liquid inlet. The column retains a separation media; and at least part of an elongated frit has been arranged substantially parallel to the column walls to segregate the separation media from the bottom liquid inlet/outlet. A liquid sample is processed in said column in a method including aspiration and dispensing of fluid to and from the bottom liquid inlet/outlet; adding a liquid at the top liquid inlet; or any combination thereof.

## Description

### Technical field

The present invention relates to the area of separation of target molecules, preferably by automated liquid processing. More specifically, the invention relates to a separation device, which enables efficient separation of target molecules, for example by parallel processing. The invention also embraces a method of separating target molecules, e.g. a method of automatically processing a liquid sample comprising the target molecules in sample volumes which may be in the range of 100mL-5L.

### Background

Conventional chromatographic columns may be constructed with a packed bed of media contained by a top and a bottom frit. A specific range of columns are the PhyTip^{®} pipette tip columns (Phynexus Inc., phynexus.com), which are constructed with pipette tip column bodies. Frits are positioned at the top and bottom distal end of the tip with column media placed between the two frits. Currently, the largest commercially available PhyTip^{®} pipette tip columns are 20 mL.

In the area of chromatography, it is known that larger bed volumes limit the amount a chamber space above the upper frit, thus limiting the sample volume that can be processed. However, a potentially more serious problem is that the backpressure of a column will increase dramatically as the bed volume is increased slowing the flow rate of sample and buffers pumped through the column. Large samples volumes are desired; however, by limited both column chamber volume and flow rate, the ability to process large sample volumes is compromised.

US 9,733,169 relates to an extraction device used during sample preparation for chemical analysis. More specifically, according to US 9,733,169, conventional pipette extraction products, such as disposable pipette extraction products, including those described in U.S. Pat. No. 6,566,145, use loosely contained sorbent inside of a pipette tip, where the sorbent is contained through the use of a lower screen, or filter, and an upper porous barrier. This type of pipette tip extraction device utilizes dispersive SPE, where the term "dispersive" refers to the solid phase sorbent being thoroughly mixed with liquid solutions aspirated into the pipette tip.

However, according to US 9,733,169, such disposable pipette extraction does not work well with narrow and low volume tips. In fact, it is stated that such disposable pipette extraction may be irreproducible when incorporated in 1 mL pipette tips, as is commonly used for 96 well plates and robotics.
To overcome this problem, it has been proposed to overcome this problem by incorporating an intermediate porous barrier, which ensures the sorbent being mixed with the solutions at aspiration and dispensing, and which allows liquid solutions to pass through, but prevents the sorbent from passing through.

According to the '169 patent, the proposed intermediate barrier may cause losses in recovery because some of the liquid solution will inevitably get trapped by the porous membrane. In addition, the existence of such a barrier will create back pressure issues. Consequently, it is an object of the '169 patent to provide a dispersive SPE device that may be used to process liquid sample solutions for reproducible chemical analysis with low back pressure.
To this end, the '169 patent describes a pipette tip device which includes a pipette tip having a volume of about 1 mL or less and a lower barrier at its narrow (lower) end, and a porous upper barrier at its wide opening (upper end), with loose sorbent between barriers. To provide turbulent mixing of sorbent and liquid, the '169 patent proposes a baffle system interior to the pipette tip.

Further, automated systems for larger scale purification are commercially available from Phynexus Inc. (https://phynexus.com/wp-content/uploads/AutoPlasmid MMG Automated Plasmid Purification v52019.pdf), offering fully automated maxiprep, megaprep and gigaprep scale purification of plasmid DNA. The PhyNexus AutoPlasmid MMG uses dual-flow chromatography, and includes 200+ or 1000+ PhyTip columns which include upper and lower low dead volume frits.

However, due to constantly increased demands of faster and more efficient liquid processing of large volumes of sample, there exists a need in this area to improve the ability to process large liquid sample volumes and to increase the rate by which sample and buffer flows through the column without increasing column backpressure.

### Summary of the invention

A first aspect of the present invention is a separation device comprising at least one column provided with a bottom liquid inlet/outlet and adapted to receive a separation media; wherein at least part of an elongated frit has been arranged substantially parallel to the column wall segregating separation media from the bottom liquid inlet/outlet.

A second aspect of the invention is a method of separating at least one target molecule from a liquid, which method comprises providing at least one column, which is provided with a bottom liquid inlet/outlet and optionally with a top liquid inlet, which column retains a separation media; wherein at least part of an elongated frit has been arranged substantially parallel to the column wall and segregating the separation media from the bottom liquid inlet/outlet; and processing a liquid sample in said column in a method including aspiration and dispensing of fluid to and from the bottom liquid inlet/outlet; adding a liquid at the top liquid inlet; or any combination thereof.

Further embodiments, details and advantages of the invention will appear from the dependent claims as well as the whole specification of the present application.

### Definitions

The term "separation media" is used herein for any conventional solid phase media, such as chromatography media in particulate form, which particles are porous and include separation functionalities. Chromatography media is commonly grouped into media which comprises organic or inorganic solid particles. Organic separation media is often divided into natural polymers, such as agarose and dextrose; and synthetic polymers, such as styrene and divinyl benzene (DVB); while inorganic media include solid phases such as silica and diatomaceous earth. Separation functionalities may be ligands coupled to the surfaces; and/or chemical entities of the solid support that are available for and capable of interacting with a target molecule.

The term a "bed" of media is used broadly herein for a layer of separation media, which has not yet been dispersed by a liquid flow. Thus, a "bed" as used herein is not required to have been packed by applied external pressure - as the skilled person will realize, it may be more or less densely packed, or simply sedimented, by a liquid passing downwards in a column as described herein.

The term "dispersed media" is used herein for media dispersed by a flow of fluid, such as liquid. "Dispersed" media particles move freely; and are not present as a packed bed. The term "perpendicular" flow is used herein for a flow which exits the side of an elongated frit into a separation media more or less in the direction of the sides of the column (the column wall).

The term "dual chromatography flow", also known as "back-and-forth flow", moves liquid two or more times in and out of a column, entering and exiting the column distal end.

The terms used herein to describe volumes of sample - "Maxipreparation" (short "maxi prep"); "Megapreparation" (short "mega prep"); and "Gigapreparation" (short "giga prep") - are used herein as conventionally used in the area of plasmid separation.

Thus, a "maxi prep" scale commonly involves a starting culture sample volume of 100-200mL, with an expected DNA yield of 500-850µg; a "mega prep" scale commonly involves a starting culture sample volume of 500mL - 2.5L, with an expected DNA yield of 1.5-2.5mg; and a "giga prep" scale commonly involves a starting culture sample volume of 2.5-5L, with an expected DNA yield of 7.5-10mg.

### Brief description of the drawings

Figure 1 is provided to illustrate how, in a column of the separation device according to the invention, the liquid flow is directed from a bottom liquid inlet 1a and up during a phase of aspirating liquid.
Figure 2 illustrates, in the same column as in figure 1, how liquid can flow in the opposite direction, i.e. from the top liquid inlet 1b towards a bottom liquid outlet 1a of the column, during dispensing of liquid.
Figure 3 is an expanded view of an elongated frit 6, here too shaped as a tube frit, arranged in separation media 7. Frit liquid passages 11 are shown schematically as holes (size not shown in dimension).
Figure 4 illustrates how an elongated frit 6 may be assembled by wrapping mesh 10 around a tubular hollow support 9. In Figure 4a, the hollow support is shown as having holes 8 enabling fluid passage. In Figure 4b, a tube frit - an example of an elongated frit 6 according to the invention - has been assembled from a tubular hollow support 9 over which porous mesh 10 has been wrapped.
Figure 5 is a table outlining the general performance for plasmid purification according to the invention.

### Detailed description of the invention

The present invention will now be described with reference to the drawings. As appears from above, in a first aspect, the present invention relates to a separation device comprising at least one column provided with a bottom liquid inlet/outlet 1a and adapted to receive a separation media; wherein at least part of an elongated frit 6 has been arranged substantially parallel to the column wall 2 and segregating separation media 7 from the bottom liquid inlet/outlet 1a.

Thus, by an appropriate selection of dimensions, in particular the porosity, the elongated frit 6 may prevent separation media 7 from leaving the column.
The bottom inlet/outlet 1a is adapted for passage of liquid in and out of the column, allowing for aspiration and dispensing of liquid. Further, the present column may comprise a top liquid inlet 1b, adapted for passage of liquid into the column i.e. top down flow.

In this context, the term 'column wall' 2 is understood to mean the parallel (tubular) wall of the column body rather than any sloped top or end part of a column. Differently worded, at least part of the elongated frit 6 according to the invention is substantially vertically positioned within the column.

The elongated frit 6 is according to the invention arranged to provide for a direction of liquid flow which is substantially perpendicular to the column wall 2 as liquid is passed across the column during sample processing. In other words, as liquid crosses the elongated frit 6, its direction of flow will be substantially horizontal.

The flow provided according to the invention will allow for dispersion of separation media 7 as liquid is aspirated from the bottom, in turn providing for an efficient mixing and capture of a target molecule by the separation media 7.
As liquid is dispensed from the column to the bottom inlet/outlet 1a, the separation media will settle. In this context, it is understood that the 'bottom inlet/outlet' 1a is located at the distal end of the column, as will appear from the drawings.

As the skilled person will appreciate, separation media 7 may be positioned in the column as a more or less densely packed bed, which may advantageously be dispersed by an upward flow obtained as described above, and which may be re-packed, or return to a more sedimented form, as liquid is dispensed. Advantageous bed volumes may be from the smaller sizes of about 20, 15, 10, 5, 3, 2 and 1 mL, or even as small as 50 and 100 µL; and up to larger sizes of up to about 100 mL, about 1 L and about 10 L and even large sizes up to about 50, 100, or 200L. An advantageous separation bed is of a volume selected from the group consisting of 20, 10 and 5 mL. As discussed in more detail below in relation to the second aspect of the invention, the column according to the invention allows for back-and-forth flow.

In the present context, the term "substantially parallel to the column wall" should be understood as positioned at an angle that provides for the direction of flow described above. For example, at least part of the elongated frit 6 may be arranged at an angle within a broader range, such as about 45-90° to the horizontal plane, assuming that the column is arranged vertically.
In this context, the term "at least part of' should be understood in a broad sense, providing for a liquid flow, which constitutes a part of the total flow, directed substantially perpendicular to the column wall 2 as it passes across the column during sample processing.

An upper frit 5 may be arranged in the above-described column at a position which allows for the column to receive separation media 7 below. Thus, the upper frit 5 is used as conventional to retain separation media 7 and prevent it from reaching the column top during liquid sample processing.

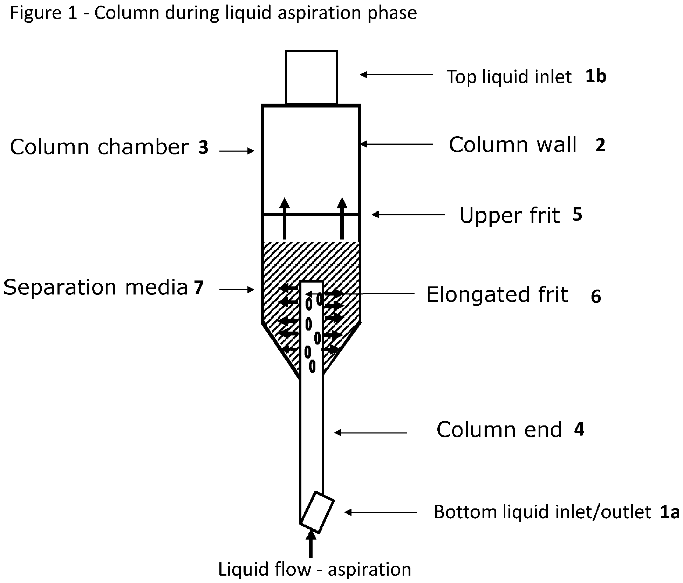

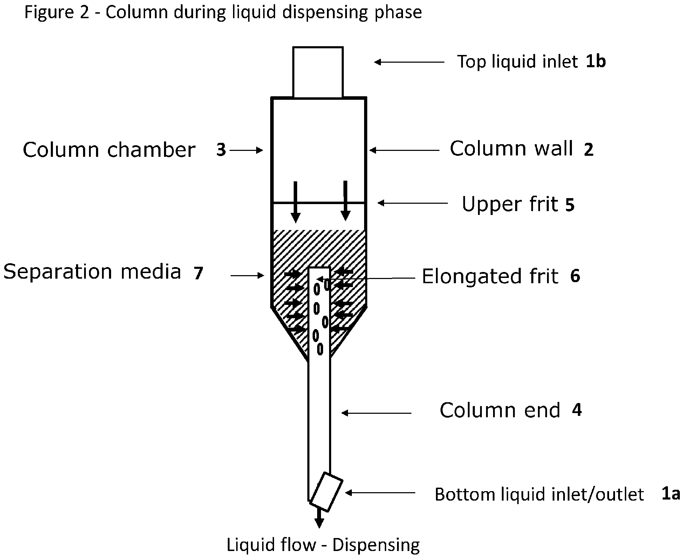

According to the present invention, a volume herein denoted a column chamber 3 may be arranged in the column, above the upper frit 5, as shown in Figure 1 and 2. Thus, after having dispersed the separation media 7, the liquid flow is directed upward going through the top frit 5 and into the column chamber 3. The column chamber 3 volume may be for example about 40 mL, allowing processing of 40 mL aliquots of sample liquid. However, the column according to the invention may be configured to virtually any size and column chamber size, including virtually any volume of separation media 7.

As the skilled person will appreciate, an essential factor for efficient processing is that the liquid flow into the column should be strong enough to disperse the separation media 7, at least to some extent. The skilled person will also appreciate that larger columns and lower aspiration backpressure will require faster liquid flows.
In an illustrative embodiment described here, the liquid flow rate was 100 mL/min.

Further, the positioning of said upper frit 5 in accordance with the invention may allow for separation media 7 as well as free space below said upper frit 5, as appears from figures 1 and 2. In other words, when separation media 7 has been arranged in the column, such as in the form of a packed bed, a free volume will be available between the separation media 7 and the upper frit 5. During processing, the said volume will be more or less occupied with dispersed separation media, as described above.

During sample processing, the dispersion of the separation media 7 in accordance with the invention will enable an efficient mixing of a liquid sample with the separation media. During such mixing, molecules from the sample, such as biomolecules, with interact with the available surface area of the media, e.g. by ionic interactions; by hydrophobic interactions; by affinity interactions of 'lock-key' type, depending on the kind of separation media selected. Thus, target molecules, such as biomolecules, may be bound, captured or otherwise retained according to any commonly known separation principle.

The column according to the invention may retain any separation media 7 suitable for processing of a certain sample, such as particulate chromatography media. As the skilled person will appreciate, the porosity of the upper frit 5, as well as the properties of the elongated frit 6, should be adapted to retain the separation media 7 in position during processing.
Thus, the elongated frit 6 according to the invention may comprises a mesh 10 having dimensions adapted for the intended separation.

The mesh 10 of the elongated frit 6 may be maintained in position by an appropriately positioned hollow support 9 comprising one or more holes 8 at appropriate locations and of suitable sizes to allow for liquid to pass the mesh 10.
For example, the mesh 10 may be positioned anywhere sufficiently close to the support 9 to be retained in a position that allows for the above-described advantageous flow across and substantially perpendicular to the elongated frit 6. Thus, the mesh 10 may be attached to a support 9, coated on a support 9 or wrapped around a support 9. As the skilled person will appreciate, such a support 9 may be made of any suitable material which is inert towards the conditions of the intended process, such as plastic.

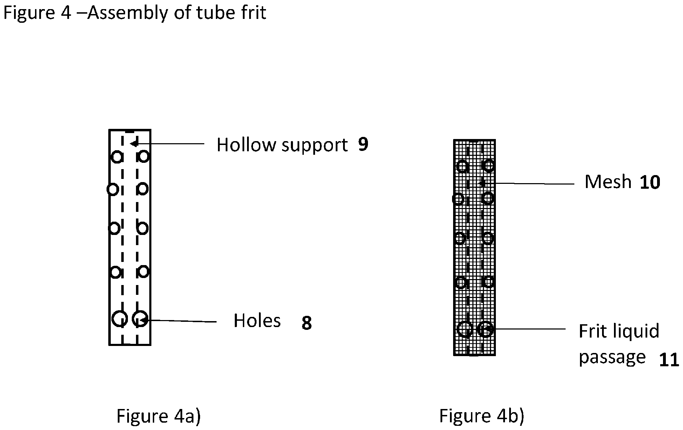

Specifically, the support 9 should be hollow to allow for a liquid flow to enter at one end and exit across the length of the supported mesh 10. The support 9 may be defined by a circular, oval, triangular or other angular cross section, such as a substantially circular cross section resulting in a tubular support.
Further, to allow for a desired flow, the support 9 should include some kind of liquid passages, such as holes 8. As illustrated in the Figure 4, the elongated frit 6 according to the invention may comprise of a tubular support 9 including evenly positioned holes 8, onto which mesh 10 has been wrapped.

Various designs of the elongated frit are encompassed by the present invention. For example, as discussed above, the elongated frit may be tubular, or at least partly tubular. The elongated frit, or part thereof, may be designed as having a variable cross section, such as a tube having a smaller diameter at its lower end than at its upper end; or a smaller diameter at its upper end than at its lower end. The diameter in such a design may be changing with a constant and resemble a cone, or an upside down cone. Alternatively, it may be designed as a bulb, or any other shape as long as it provides for a liquid flow which at least partly is passing the elongated frit as discussed above.

As appears from Figures 1-3, the column of the device according to the invention may be provided with a tubular column end 4. The tubular column end 4 may be relatively long as compared to conventional columns and may e.g. be of a length that constitutes a suitable part of, such as about one third of, the length of the column. The skilled person can adapt the length of the column end 4 as well as the slopes of the lower end of the column (below the tubular column wall 2) for the desired process.
As shown in Figures 1-3, the tubular column end 4 and the elongated frit 6 may be arranged as an integral part (one single part, or tube, or fused parts) allowing for liquid to flow through both, in either direction.

The present column is advantageously dimensioned to fit a liquid processing system. Such systems are conventionally used in the area of chromatography and other separation, such as biomolecule processing, and may include a computer that controls all of, or parts of the process using the appropriate software.

Thus, the device according to the invention may include means for passing liquid between the upper and the lower end of the column, which means are capable of providing positive and negative pressure.
As the skilled person will appreciate, said means may be a pump, such as a displacement pump.

Alternatively, or additionally, specific means are provided to support for top down flow, i.e. for adding liquid to a top liquid inlet 1b of the column and allowing the liquid to descend either by gravity, or by pumping. As the skilled person will appreciate, a device according to the invention may be used in top down and/or aspiration/dispensing, or in any mix or combination thereof. The invention may for example provide for a process wherein sample and elution liquid are both aspirated and dispensed at the bottom liquid inlet/outlet 1a, while wash liquid may be added at the top liquid inlet 1b, and for example allowed to pass the column by gravity. In such a wash step, the column may be taken out of the liquid processing step to allow for convenient wash using the top liquid inlet 1b, and reinserted after the completed wash to proceed e.g. with a step of eluting target molecules.

As discussed above, the separation media 7 present in the column may be dispersed during liquid aspiration, i.e. in the upward stroke of the pump. This dispersion enhances the contact of the sample with the column media and capture of target molecules is made fast and more complete than many prior art methods.
In the downward stroke of the pump, the column bed repacks and fluid flows through the bed. The liquid flow diverts, moving perpendicular to the separation media back through the elongated frit and out the end of the column. This process can be repeated as many times as necessary. Thus, the device of the invention may advantageously be used in 'back-and-forth' flow, also known as dual flow chromatography (DFC).

The present invention has been shown to lower the backpressure in automatic processing of liquid samples, allowing for fast flows into the column and hence efficient sample processing.

Finally, the column volume of the separation device according to the invention is increased by the present design, so that up to 40 mL of sample can be processed in one stroke.

The device according to the invention may comprise two or more columns arranged for parallel processing, such as in automated processing.

The device according to the invention has been developed to capture, clean and recover biomolecules. In other words, the device may be used for one or more steps of a sample processing protocol preceding analysis of target molecule(s). Alternatively, the invention may be used in the separation of target molecules from complex liquid contents, where the device of the invention may be used in one or more steps of purification, optionally combined with conventional steps of purification of biomolecules such as centrifugation, chromatography, filtration, etc.

Thus, in a second aspect, the present invention relates to a method of separating at least one target molecule from a liquid, which method comprises providing at least one column, which is provided with a bottom liquid inlet/outlet 1a and optionally with a top liquid inlet 1b, which column retains a separation media 7; wherein at least part of an elongated frit 6 has been arranged substantially parallel to the column wall 2 and segregating the separation media 7 from the bottom liquid inlet/outlet 1a; and processing a liquid sample in said column in a method including aspiration and dispensing of fluid to and from the bottom liquid inlet/outlet 1a; adding a liquid at the top liquid inlet 1b; or any combination of using the bottom liquid inlet/outlet 1a and the top liquid inlet 1b.

More specifically, the method of the invention may comprise the steps of
a) providing at least one column, which is provided with a bottom liquid inlet/outlet 1a and which retains a separation media 7; wherein at least part of an elongated frit 6 has been arranged substantially parallel to the column wall 2 and segregating the separation media 7 from the bottom liquid inlet/outlet 1a;
b) providing a liquid which includes said at least one target molecule in admixture with other molecules;
c) placing the bottom liquid inlet/outlet 1a of the column into said liquid;
d) in an aspirating phase, applying a negative pressure to the column to bring liquid to pass from bottom liquid inlet/outlet 1a of the column and through the elongated frit 6 in a direction of flow which is substantially perpendicular to the column wall 2, whereby the liquid flow disperses the separation media 7; and, optionally, allowing time for capture of target molecule(s) by the separation media 7.

The method may comprise the further steps of
e) in a dispensing phase, applying a positive pressure to the column to bring liquid to pass through the elongated frit 6 in a direction of flow which is substantially perpendicular to the column wall 2 towards the bottom liquid inlet/outlet 1a of the column; and
f) collecting liquid exiting the bottom liquid inlet/outlet 1a of the column.

Optionally, the steps above are followed by the steps of
g) repeating steps d) and f) with an eluting liquid that releases target molecules from the separation media 7; and
h) collecting eluting liquid comprising released target molecule(s) via the bottom liquid inlet/outlet 1a of the column, optionally followed by a step of recovering and/or analyzing eluted target molecule(s).

The analysis of target molecule(s) may include any conventional or advantageous method, such as mass spectrometry (MS), optionally combined with chromatography, such as HPLC.

Further, the method may use back and forth flow of sample, wash and/or eluting liquid. Back and forth flow, also known as dual chromatography, is by now well known to the skilled person in this field, see e.g. US 7,482,169 wherein processing with back and forth flow is described in detail.

As discussed above, since liquid may also be added to the top liquid inlet 1b of the column, the skilled person may vary the direction of liquid flow in a flexible way adapted to she specific circumstances.

As the skilled person will appreciate, one or more wash steps may be included after the aspiration of sample. Such wash step may be performed in the same manner as the aspiration step. One or more types of buffers may be used in the wash, and these washes may be performed in serial steps.

As the skilled person will appreciate, the wash may be performed in a top down flow of fluid where the fluid is introduced at the top liquid inlet 1b of the column. The fluid may flow through the column by gravity flow or a pump may be engaged to force fluid flow through the column

The elution may also be performed in in back-and-forth fluid flow or in top down fluid flow.

The target molecule may be a biomolecule, such as a protein or nucleic acid, or a fragment thereof.
For example, the target molecule may be a protein selected from the group consisting of peptides and antibodies, such as Fab fragments.
Alternatively, the target molecule(s) may be a DNA or an RNA molecule, such as a plasmid, e.g. a conjugative or non-conjugative plasmid.

The liquid provided in step b) may originate from a cell culture or a chemical synthesis. In step d), a liquid volume may be in the range of about 20mL to about 1L is aspirated. For example, a liquid sample of 40mL may be aspirated, or any larger volume, depending on the application.

The positive and negative pressures of steps d) and f) may be provided by a suitable pump, such as a displacement pump.

In step a), at least two columns may be provided and processed in parallel in subsequent steps.

The columns may comprise different separation media; and/or different liquids may be aspirated into the separate columns. 'Back-and-forth' flow, also known as dual flow chromatography (DFC), may be utilized in sample aspiration and/or elution, to increase the contact time between liquid and separation media.

The separation device according to the invention may be used in the present method. Thus, all details provided herein in relation to the device of the first aspect may be applicable to the method, and vice versa.

### Detailed description of the drawings

Figure 1 is provided to illustrate how, in a column 1 of the separation device according to the invention, in use the liquid flow is directed from a bottom liquid inlet 1a and up during a phase of aspirating liquid. It appears clearly how liquid is aspirated and passed inside the column end 4 and on into the elongated frit 6, here shown as a hollow tube which has been integrated into one piece with the column end 4, were the aspirated liquid flows at an angle substantially perpendicular to an upper frit 5; or to the surface of the separation media 7.
A pump (not shown) may be fitted to the column top applying negative and positive pressures. In the dispersion mode, negative pressure is applied to the column top and liquid flows into the column at the distal end. The liquid flows into the column through the elongated frit 6 and disperses the separation media 7. The flow continues to travel into the column chamber 3. Dispersed separation media 7 is contained in the column by the upper frit 5. A typical column has an overall length of 206 mm with an end tube length of 67 mm and a column body diameter of 35 mm.
The liquid flow into the column disperses the separation media 7, allowing a quicker capture of target molecules, such as plasmids.

Figure 2 illustrates, in the same column as in figure 1, how liquid can flow in the opposite direction, i.e. from the top towards a bottom liquid outlet of the column, during dispensing of liquid. It appears clearly how the liquid passes through the elongated frit 6 at an angle substantially perpendicular to the upper frit 5, in order to leave the column via the elongated frit 6 and the column end 4.
The liquid flow out of the column will repack the separation media similar to its original state, such as a more or less packed bed.

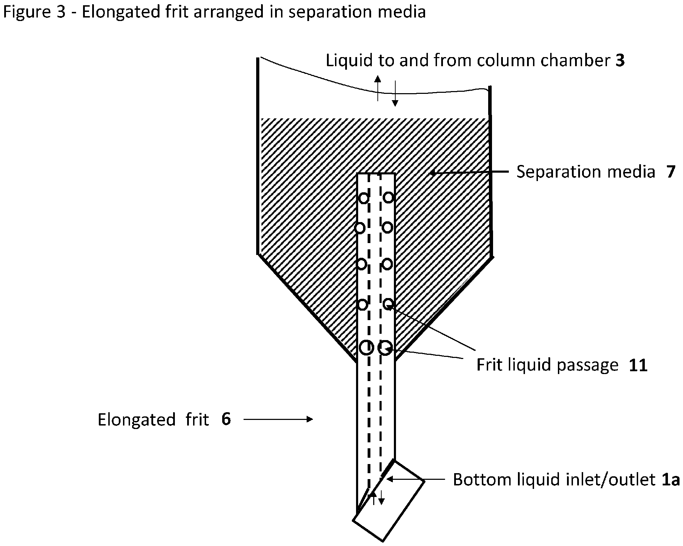

Figure 3 is an expanded view of an elongated frit 6, here too shaped as a tube frit, arranged in separation media 7. Frit liquid passages 11 are shown schematically as holes 8 (size not shown in dimension). In the embodiment shown here the bottom holes 8 are larger allowing better drainage of the column in reverse flow mode (dispensing liquid). The number, size and density of the holes will vary depending on the particular column embodiment and the strength of the pump to disperse the separation media. As the skilled person will appreciate, as the holes' sizes are decreased, the velocity of the liquid flow increases, which in turn increases the dispersing ability of the elongated frit.
Figure 3 also illustrates an advantageous feature of the column of the device of the invention in that the parallel column walls 2 ends, and the lower wall has a slope of about 45° to the vertical. Said slope of the lower wall may be varied, but is advantageously not 95° to the vertical.

Figure 4 illustrates how an elongated frit 6 may be assembled by wrapping mesh 10 around a tubular hollow support 9.
In Figure 4a, the hollow support 9 is shown as having holes 8 enabling fluid passage.
In Figure 4b, a tube frit - an example of an elongated frit 6 according to the invention - has been assembled from a tubular hollow support 9 over which porous mesh 10 has been wrapped. Specifically, each hole 8 covered with mesh 10 will constitute a frit liquid passage 11. Thus, due to the mesh 10, the holes 8 of the hollow support 9 will not allow separation media 7 to leave the column.

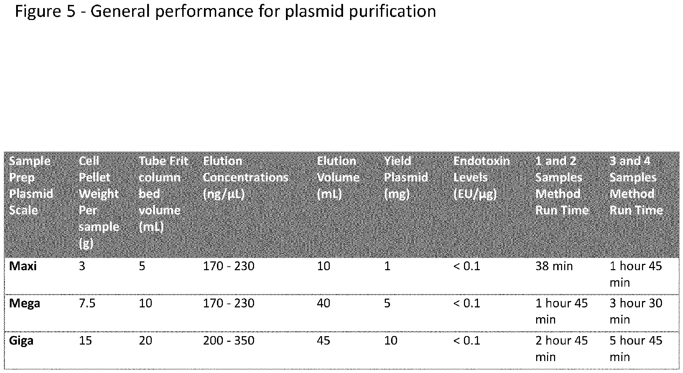

Figure 5 is a table outlining the general performance for plasmid purification according to the invention, specifically envisaged for three sizes having an elongated frit designed as a tube frit.

### EXPERIMENTAL PART

The present examples are provided for illustrative purposes only and should not be construed as limiting the invention as defined by the appended claims. All references provided below and elsewhere in the present application are hereby included herein via reference.

### Example 1. Maxi Prep purification process using a 5 mL bed volume column in an automated instrument for plasmid purification

**Table 1: Buffers for maxi prep purification**

| **Maxi Prep** | | | |
|---|---|---|---|
| **Buffers** | **Volume (mL)** | **Container** | **Storage Temperature for best yield** |
| Resuspension Buffer (RB) | 29 | 60 mL bottle | 4°C overnight |
| Lysis Buffer (LB) | 34 | 60 mL bottle | Room temperature |
| Precipitation Buffer (PB) | 41 | 60 mL bottle | 4°C overnight |
| Endotoxin Removal Buffer (ERB) | 20 | 50 mL conical tube | 4°C overnight |
| Equilibration Buffer (EQB) | 30 | 30 mL conical tube | Room temperature |
| Wash Buffer (WB) | 120 | Wash Buffer container | Room temperature |
| Elution Buffer | 60 | 30 mL conical tube (2) | Room temperature |

The buffers consist of:
Resuspension Buffer: 50mM Tris-HCl, pH8.0; 10mM EDTA
Lysis Buffer: 0.2 M NaOH; 2.5% SDS
Precipitation Buffer: 2.04 M KOAc, pH 4.5
Endotoxin Removal Buffer: Surfactant
Equilibration Buffer: 50mM Tris HCl, pH 7.0
Wash Buffer: 50 mM Tris HCl, pH 7.0; 300 mM NaCl
Elution Buffer: 50 mM Tris HCl, pH 8.5; 500 mM NaCl

### Buffer Aliquot (Manual)

Aliquot the buffers according to the table below, the volumes are enough for one sample.

Add 29 µL of 0.1mM thymolphthalein into the resuspension buffer. Store the buffers at recommended temperature overnight before usage.

### Cell Lysate Preparation (Manual)

Weight out 3 g of wet, fully thaw *E.coli* cell pellet
Add RNase (20mg) into Resuspension Buffer and mix well
Add Resuspension Buffer with added RNase into the cell pellet and shake vigorously to break up the pellet
Add Lysis Buffer into the cell mixture and gently capsizing the mixture until the solution turn completely blue (around 20-30 times)
Add Precipitation Buffer into the cell mixture and gently capsizing the mixture until the solution turn completely white and no more blue color observed (around 20 times)
Keep the cell bottle upside down until the separation between the cell lysate and cell debris is observed
Gently pour the cell lysate sample into the filter in Instrument Sample Box to separate the cell lysate from cell debris
Final collected cell lysate sample will be around 60-80 mL

Automated instrument: A fully automated instrument for plasmid purification was obtained from Phynexus (http/phynexus.com), adapted for the herein used sample volumes and provided with an elongated frit designed as a tube frit at its bottom end. Specifically, the tube frit used herein was designed in accordance with the drawings.
Refiltration:
   Sample volume after filtration: 60-80 mL
   Aspirating 20 mL from sample box and expel 20 mL at rate = 30 mL/min on top of the filter
   Do this for 10 additions
Incubation:
   Transfer 15 mL of ERB endotoxin removal buffer to the sample box
   Delay for 30 min
Equilibrate column
   Engage the tube frit column
   Aspirate and expel 30 mL of EQB (4 times)
Capture:
   Aspirate 30 mL of semi-clarified lysate and expel into first position, A1B1.
   Aspirate and expel 25 mL 7 times
   Input pauses after each cycle (to collect sample for agarose gel)
Wash:
   Aspirate and expel 30 mL of wash buffer
   Aspirate 30 mL of wash buffer from the wash buffer reservoir
   Expel 30 mL of wash buffer into the WASTE position
   Do into of 60 mL of wash buffer.
   Input pause to collect wash sample for agarose gel
Elution: Maxi Prep
   Aspirate 30 mL from elution buffer
   Expel 30 mL of elution buffer into another conical tube.
   Collect 20 mL, Concentration is 150 µg/mL

### Example 2. Buffer volumes and pellet weights for purifying giga prep and mega prep scale plasmid purifications

The instrument described in Example 1 was used in this example 2.

**Table 2: Buffer volumes and pellet weight for purifying giga prep scale plasmid purification**

| Giga Prep (Cell Pellet Weight = 15 g) | |
|---|---|
| Buffer | Volume (mL) |
| Resuspension Buffer | 87 |
| Lysis Buffer | 103 |
| Precipitation Buffer | 123 |
| Endotoxin Removal Buffer | 30 |
| Equilibration Buffer | 30 |
| Wash Buffer | 500 |
| Elution Buffer | 60 two aliquots |
| Column Resin Volume | 20 |

Refiltration
Transfer 40 mL of semi clarified lysate out of the sample reservoir and into the first position (A1B1)
Aspirate 20 mL of semi clarified lysate and expel 20 mL (30 mL/min) on top of the filter.
This is repeated 10 times
Incubation
25 mL of Endotoxin Removal Buffer (ERB) is added to the sample reservoir. Incubate for 28 minutes
Equilibration
Column aspirates and expels 30 mL of equilibration buffer for 4 cycles
Capture
30 mL of lysate is transferred from sample box to positions A1B1-A4B4.
Each cycle aspirates 25 mL (500 mL/min) and expels 25 mL (70 mL/min)
The column will perform the 8, 4, 2 and 2 cycles in A1B1, A2B2, A3B3, and A4B4, respectively.
Elution: Giga Prep
Aspirate 30 mL from elution buffer

| Sample | Nucleic | A260/A280 | A260/A230 | A260 | A280 | Vol | Yield | |
|---|---|---|---|---|---|---|---|---|
| Name | Acid (ng/µL) | | | | | (mL) | (mg) | |
| 15g giga elution 1 | 188.97 | 1.87 | 2.22 | 3.78 | 2.02 | 29.44 | 5.56 | |
| 15g giga elution 2 | 227.56 | 1.87 | 2.24 | 4.36 | 2.33 | 28.88 | 6.57 | |
| | | | | | | | 12.14 | mg total volume |

Expel 30 mL of elution buffer into another conical tube.
Repeat Process on next sample aliquot

### Example 3. Buffer volumes and pellet weight for mega prep scale plasmid purification The instrument described in Example 1 was used in this example 3.

**Table 3: Buffer volumes and pellet weight for mega prep scale plasmid purification**

| Mega Prep (Cell Pellet Weight = 7.5 g) | |
|---|---|
| Buffer | Volume (mL) |
| Resuspension Buffer | 44 |
| Lysis Buffer | 52 |
| Precipitation Buffer | 62 |
| Endotoxin Removal Buffer | 20 |
| Equilibration Buffer | 30 |
| Wash Buffer | 300 |
| Elution Buffer | 60 |
| Column Resin Volume | 10 |

## Claims

1. A separation device, which includes at least one column, which is provided with a bottom liquid inlet/outlet (1a) and which is adapted to receive a separation media; wherein at least part of an elongated frit (6) has been arranged substantially parallel to the column walls and segregating separation media (7) from the bottom liquid inlet/outlet (1a).

2. A device according to claim 1, which is provided with a top liquid inlet (1b).

3. A device according to claim 1 or 2, wherein an upper frit (5) has been arranged in said column at a position which allows the column to receive separation media (7) below said upper frit (5).

4. A device according to claim 3, wherein said upper frit (5) har been positioned so that sufficient volume for of separation media (7) as well as free space is provided below said upper frit (5).

5. A device according to any one of the preceding claims, wherein the elongated frit (6) comprises a mesh (10).

6. A device according to claim 5, wherein the mesh (10) is maintained in position by a hollow support (9) which includes at least one hole (8).

7. A device according to claim 6, wherein the hollow support (9) is defined by a circular, oval, triangular or other angular cross section.

8. A device according to claim 6 or 7, wherein the elongated frit (6) is comprised of a tubular support (9) onto which mesh (10) has been wrapped at the side facing the separation media (7).

9. A device according to any one of the preceding claims, wherein the bottom of the column is provided with a tubular column end (4).

10. A device according to claim 9, wherein the length of said tubular column end (4) constitutes about one third of the length of the column.

11. A device according to claim 9 or 10, wherein the tubular column end (4) and the elongated frit (6) are arranged as an integral part allowing for liquid to flow through both, in either direction.

12. A device according to any one of the preceding claims, wherein the column has been dimensioned to fit a liquid processing system.

13. A device according to any one of the preceding claims, which includes means for passing liquid between the upper and the lower end of the column.

14. A device according to claim 13, wherein said means is capable of providing positive and negative pressure.

15. A device according to claim 14, wherein said means comprises pumping means.

16. A device according to any one of the preceding claims, which comprises two or more columns arranged for parallel processing provided by pumping means.

17. A method of separating at least one target molecule from a liquid, which method comprises providing at least one column, which is provided with a bottom liquid inlet/outlet (1a) and optionally with a top liquid inlet (1b), which column retains a separation media (7); wherein at least part of an elongated frit (6) has been arranged substantially parallel to the column walls (2) and segregating the separation media (7) from the bottom liquid inlet/outlet (1a); and processing a liquid sample in said column in a method including aspiration and dispensing of fluid to and from the bottom liquid inlet/outlet (1a); and/or adding a liquid at the top liquid inlet (1b); or any combination thereof.

18. A method according to claim 17, which method comprises the steps of
a) providing at least one column, which is provided with a bottom liquid inlet/outlet (1a) and optionally a top liquid inlet (1b), which column retains a separation media (7); wherein an elongated frit (6) has been arranged substantially parallel to the column walls (2) and segregating the separation media (7) from the bottom liquid inlet/outlet (1a);
b) providing a liquid which includes said at least one target molecule in admixture with other molecules;
c) placing the bottom liquid inlet/outlet (1a) of the column into said liquid;
d) in an aspirating phase, applying a negative pressure to the column to bring liquid to pass from bottom liquid inlet/outlet (1a) of the column and through the elongated frit (6) in a direction of flow which is substantially perpendicular to the column walls (2),
whereby the liquid flow disperses the separation media (7); and optionally, allowing time for capture of target molecule(s) by the separation media (7).

19. A method according to claim 18, which in addition comprises the steps of
e) in a dispensing phase, applying a positive pressure to the column to bring liquid to pass through the elongated frit (6) in a direction of flow which is substantially perpendicular to the column walls (2) towards the bottom liquid inlet/outlet (1a) of the column; and
f) collecting liquid exiting the bottom liquid inlet/outlet (1a) of the column; which steps are optionally followed by
g) repeating steps d) and f) with an eluting liquid that releases target molecules from the separation media; and
h) collecting eluting liquid comprising released target molecule(s) via the bottom liquid inlet/outlet (1a) of the column, optionally followed by a step of recovering and/or analyzing eluted target molecule(s).

20. A method according to any one of claims 17-19, wherein a target molecule is a biomolecule, such as a protein or nucleic acid, or a fragment thereof.

21. A method according to claim 20, wherein a target molecule is a protein selected from the group consisting of peptides and antibodies, such as Fab fragments.

22. A method according to claim 20, wherein a target molecule is a plasmid.

23. A method according to any one of claims 18-22, wherein the liquid provided in step b) originates from a cell culture or a method of chemical synthesis.

24. A method according to any one of claims 18-23, wherein in step d), a liquid volume in the range of 20mL to 5L is aspirated, such as a range of about 100mL to about 200mL; about 500mL to about 2.5L; or about 2.5L to about 5L.

25. A method according to any one of claims 18-24, wherein the positive and negative pressures of steps d) and f) are provided by a displacement pump.

26. A method according to any one of claims 18-25, wherein in step a), at least two columns are provided and processed in parallel in the subsequent steps.

27. A method according to claim 26, wherein said at least two columns comprise different separation media (7).

28. A method according to claim 26 or 27, wherein in step d), different liquids are aspirated into at least two separate columns.

29. A method according to any one of claims 18-28, wherein step d) comprises to apply back-and-forth flow to the aspirated liquid at least once.

30. A method according to any one of claims 17-29, wherein a separation device according to any one of claims 1-16 is used.
